# EUROPÄISCHE PATENTSCHRIFT

(11) **EP 1 821 078 B1**
(45) Veröffentlichungstag und Bekanntmachung des Hinweises auf die Patenterteilung: **21.12.2016**
(21) Anmeldenummer: 07001558.1
(22) Anmeldetag: 25.01.2007
(51) Int. Cl.: F01D 17/02, F01D 21/00, F04D 27/00, G01F 15/18

(54) **Traversiervorrichtung für eine Messsonde**
Traversing device for a measuring probe
Dispositif de traverse pour sonde de mesure

(30) Priorität: 16.02.2006 DE 102006007499
(43) Veröffentlichungstag der Anmeldung: 22.08.2007
(73) Patentinhaber: Rolls-Royce Deutschland Ltd & Co KG, 15827 Blankenfelde-Mahlow (DE)
(72) Erfinder: Gier, Stefan, 12305 Berlin (DE); Schroer, Frank, 12161 Berlin (DE); Wurl, Mike, 10369 Berlin (DE)

(56) Entgegenhaltungen:
- DE-U1- 8 031 556
- US-A- 5 639 975
- US-A- 5 756 906
- US-A1- 2005 172 737

## Beschreibung

Die Erfindung betrifft eine Kippvorrichtung für eine Messsonde zur Durchführung von Messungen in einem Querschnittsflächensektor eines Strömungskanal, die am Aussenumfang des Strömungskanals angeordnet ist und deren Messsonde einen im Umfangsrichtung des Strömungskanals verlaufenden Schlitz durchgreift, insbesondere zur Bestimmung des Strömungsprofils in einem Kompressor oder einer Turbine eines Gasturbinentriebwerks.

Zur Durchführung von Messungen in einem Luftkanal, beispielsweise zur Bestimmung des Strömungsprofils in dem Kompressor oder der Turbine eines Gasturbinentriebwerks, ist es bekannt, die Messsonde in einem Sektor der Querschnittsfläche des Luftkanals flächenhaft zu bewegen. Aus dem in unterschiedlichen Bereichen des Flächensektors gemessenen Druck kann schliesslich das Strömungsprofil in dem Kanal ermittelt werden. Die in den Strömungskanal ragende stabförmige Messsonde ist in einer am Aussenumfang des Strömungskanals angebrachten Traversiervorrichtung gehalten, die in einem in Umfangsrichtung des Kanalgehäuses verlaufenden Schlitz geführt und bewegt wird. Dadurch kann die Messsonde in Querrichtung des Flächensektors bewegt werden. Die Länge des Schlitzes entspricht der Grösse des zu erfassenden Flächensektors. Die Messsonde ist zudem in einer Radialbohrung der Traversiervorrichtung geführt und kann somit in dem betreffenden Flächensektor auch in radialer Richtung bewegt und zusätzlich auch noch gedreht werden. Mit der entsprechend der Schlitzlänge in einem bestimmten Verstellbereich beweglichen Traversiervorrichtung und der in dieser radial und drehbar beweglichen Messsonde kann unter einem bestimmten Anströmwinkel der gesamte Flächensektor messtechnisch erfasst werden.

Die Anordnung einer in einem Schlitz des Gehäuses einer Gasturbine verfahrbaren Traversiervorrichtung ist insofern nachteilig, als durch den Schlitz zum einen das Schwingungsverhalten des Triebwerksgehäuses geändert und dessen mechanische Stabilität verringert wird. Durch im Bereich der Schlitzkante auftretende Verwirbelungen kann das Messergebnis verfälscht werden. Trotz erheblichen Aufwandes für die Abdichtung können im Bereich des Schlitzes aufgrund der durch hohe Temperaturen bedingten mechanischen Ausdehnung dennoch Leckagen auftreten, die genaue Messungen und eine exakte Bestimmung des Volumenstroms und damit des Wirkungsgrades des Kompressors oder der Turbine des Triebwerks nicht zulassen.

Die DE-U-80 31 556 beschreibt eine gattungsgemäße Kippvorrichtung. Diese sieht eine beliebige Positionierbarkeit einer Messsonde innerhalb eines dreidimensionalen Sektors vor.

Der Erfindung liegt die Aufgabe zugrunde, eine Kippvorrichtung für eine Messsonde zur Ermittlung des Strömungsprofils in einem Gasturbinentriebwerk zu entwickeln, die auch bei erhöhten Temperaturen und Drücken im Triebwerk eine sichere Abdichtung und eine exakte Bestimmung der Volumenströme im Triebwerksgehäuse gewährleistet.

Erfindungsgemäss wird die Aufgabe mit einer gemäss den Merkmalen des Patentanspruchs 1 ausgebildeten Kippvorrichtung gelöst. Vorteilhafte Weiterbildungen und zweckmässige Ausgestaltungen der Erfindung sind Gegenstand der Unteransprüche.

Bei der Durchführung von Messungen in einem bestimmten Bereich der Querschnittsfläche eines Strömungskanals mit einer von aussen über einen Schlitz eingeführten und in diesem mittels einer Traversiervorrichtung hin und her sowie radial beweglichen Messsonde besteht der wesentliche Erfindungsgedanke darin, dass die Bewegung der Messsonde mit Hilfe einer am Aussenumfang des Strömungskanals über dem Schlitz montierten Kippvorrichtung vorgenommen wird. Die Kippvorrichtung umfasst ein Gehäuse, in dem ein Dichtkörper mit der in diesem gehaltenen und radial beweglichen Messsonde um eine horizontale Achse schwenkbar und zum Schlitz hin und somit nach aussen abgedichtet angeordnet ist. Der Innenraum des Strömungskanals und des Gehäuses sind über den Schlitz und eine im Wesentlichen deckungsgleiche Gehäuseöffnung - statisch abgedichtet - miteinander verbunden.

Aufgrund der erfindungsgemäss über einen Kippmechanismus realisierten Bewegung der Messsonde kann der Schlitz kleiner ausgeführt werden, so dass die Stabilität und das Schwingungsverhalten des Strömungskanals und auch die Strömung selbst nicht wesentlich beeinflusst werden. Die Kippvorrichtung ist zudem konstruktiv und fertigungstechnisch einfach ausgebildet. Ein Vorteil besteht in der sicheren Abdichtung des Strömungskanals mittels der statischen Dichtung am Gehäuse und der vergleichsweise sehr kleinen Dichtfläche am beweglichen Dichtkörper, so dass in Bezug auf den Volumenstrom exakte Messungen möglich sind und beispielsweise der Gesamtwirkungsgrad eines Gasturbinentriebwerks sehr genau bestimmt werden kann.

Der Dichtkörper ist als Kugel ausgebildet, die in einem Dichtkörpergehäuse um eine zum Strömungskanal im Wesentlichen parallele Achse drehbar ist. Die Kugel kann über Gleitringdichtungen das Gehäuse nach aussen gegenüber dem Schlitz im Strömungskanal abdichten. Die Kugel ist auf der horizontalen Achse an einer Seite an einem Stützelement und an der gegenüberliegenden Seite an einem in eine Vertiefung in der Kugel eingreifenden Führungselement gehalten.

An das Dichtkörpergehäuse schließt sich ein Befestigungssockel mit einem schlitzartigen, sich zum Schlitz im Strömungskanal hin erweiternden Hohlraum an, in dem - sowie in dem Strömungskanalschlitz - die Messsonde hin und her bewegt werden kann.

Ein Ausführungsbeispiel der Erfindung wird anhand der Zeichnung näher erläutert. Es zeigen:

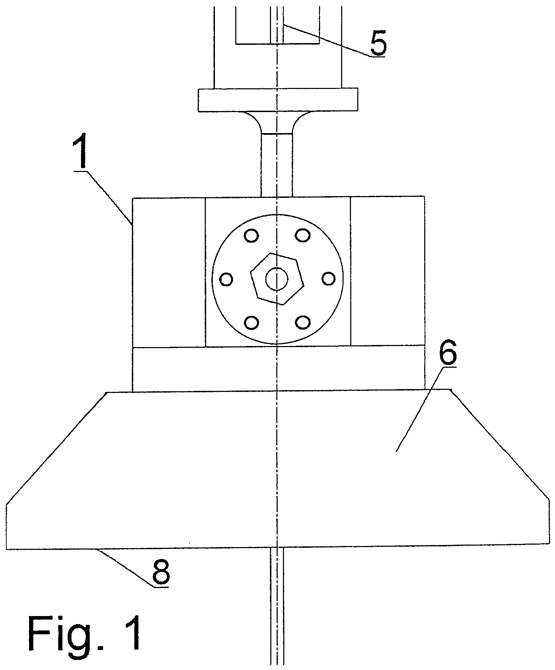

- Fig. 1: eine Vorderansicht einer als Kippvorrichtung ausgebildeten Traversiervorrichtung;

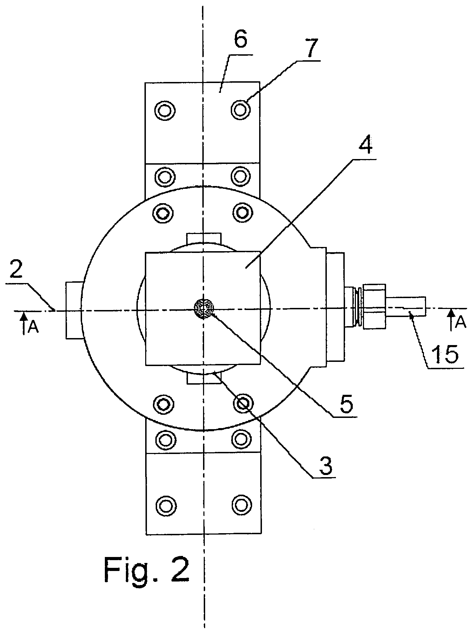

- Fig. 2: eine Draufsicht der Traversiervorrichtung nach Fig. 1:

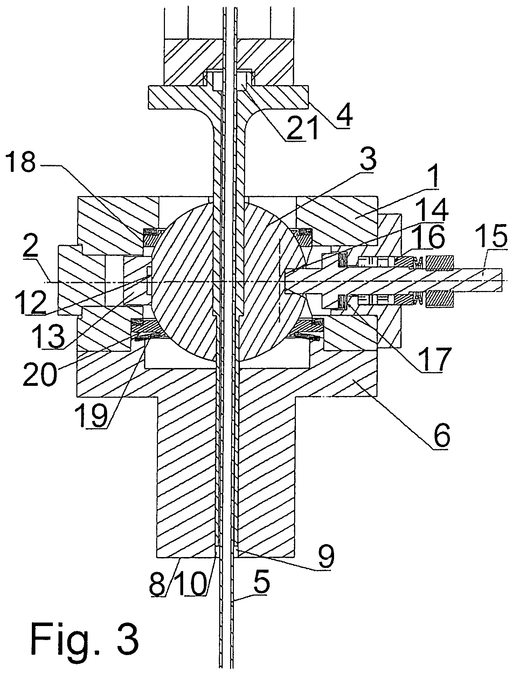

- Fig. 3: eine Schnittansicht längs der Linie AA in Fig. 2; und

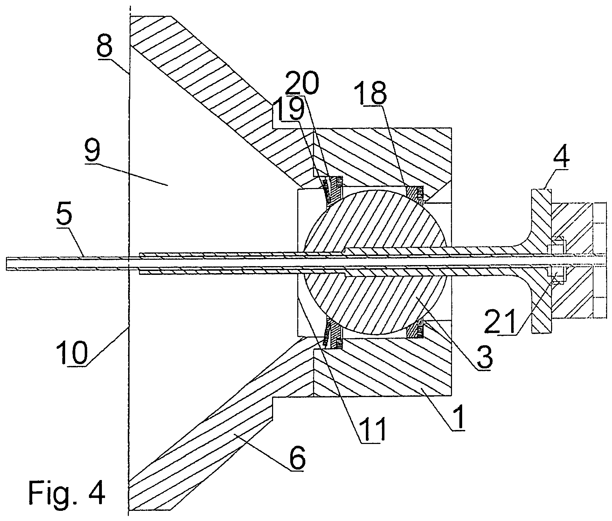

- Fig. 4: eine Schnittansicht längs der Linie DD in Fig. 2.

Die Traversiervorrichtung umfasst ein Dichtkörpergehäuse 1 mit einer in diesem gelagerten, um eine waagerechte Schwenkachse 2 verschwenkbaren Kugel 3 (Dichtkörper), die von einem radial ausgerichteten Adapter 4 zur Aufnahme einer Messsonde 5 durchdrungen ist. Das Dichtkörpergehäuse 1 ist mittels Schrauben 7 abdichtend auf einem Befestigungssockel 6 angebracht, der unter Zwischenschaltung einer statischen Dichtung (nicht dargestellt) über einer Schlitzöffnung (nicht dargestellt) im Gehäuse, das heißt, dem Strömungskanal eines Gasturbinentriebwerks (nicht dargestellt), mittels weiterer Schrauben 7 befestigt ist. In dem Befestigungssockel 6 ist ein schmaler, schlitzförmiger und sich von der Auflagefläche 8 des Befestigungssockels 6 auf dem Triebwerksgehäuse zum Kugelgehäuse 1 hin verjüngender Hohlraum 9 ausgebildet, dessen weite Öffnung 10 unmittelbar über der Schlitzöffnung im Triebwerksgehäuse liegt. Die kleine Öffnung 11 des schlitzförmigen Hohlraums 9 schließt an den Innenraum des Dichtkörpergehäuses 1 an.

In der waagerechten, parallel zum Strömungskanal verlaufenden Schwenkachse 2 weist die Kugel 3 auf einer Seite eine Abflachung 12 auf, an der sich ein im Kugelgehäuse 1 gehaltenes Stützelement 13 abstützt, während auf der gegenüberliegenden Seite eine Vertiefung 14 ausgebildet ist, in die eine mit einem Stellorgan (nicht dargestellt) verbundene Schwenkantriebswelle 15 eingreift. Die Schwenkantriebswelle 15 ist im Kugelgehäuse 1 in einem Stopfbuchsenlager 16 gelagert und zusätzlich durch einen Dichtring 17 abgedichtet. Außerdem ist die Kugel 3 im Dichtkörpergehäuse 1 in einer oberen Gleitringdichtung 18 und einer unteren, mittels eines Federrings 19 vorgespannten Gleitringdichtung 20 gehalten und gegenüber dem im Turbinengehäuse herrschenden Druck nach außen abgedichtet. Die Kugel 3 und die Gleitringdichtungen 18, 20 bestehen aus einem keramischen oder metallischen Material.

Der in der Kugel 3 fixierte Adapter 4 ist als langgestreckter Hohlkörper ausgebildet, in dem die Messsonde 5, die über die untere, weite Öffnung 10 des Hohlraums 9 hinaus in den Strömungskanal, hier das Triebwerksgehäuse (nicht dargestellt) ragt, mittels eines Stellantriebs (nicht dargestellt) in radialer Richtung verstellbar gehalten ist. Die Fixierung der Messsonde 5 in einer bestimmten Lage zum Adapter 4 und damit einer bestimmten Höhe im Triebwerksgehäuse erfolgt mit einer dem Adapter 4 zugeordneten Klemmvorrichtung 21.

Bei der Durchführung einer Messung im Triebwerksgehäuse kann die Messsonde 5 durch Verstellen der Kugel 3 mit der Schwenkantriebswelle 15 in einem bestimmten Sektor, der durch die Konizität des schlitzartigen Hohlraums 9 im Befestigungssockel 6 begrenzt ist, verschwenkt werden und darüber hinaus radial in dem Adapter 4 verstellt werden, so dass ein bestimmter Querschnittsflächenbereich im Innern des Triebwerks von der Messung erfasst wird. Aufgrund der lediglich eine Kippbewegung ausführenden Messsonde, kann der Antrieb einfach ausgeführt und die Vorrichtung insgesamt einfach ausgebildet werden. Die beweglichen Dichtflächen an der Kugel 3 zum Verschwenken der Messsonde 5 sind sehr klein, so dass der konstruktive Aufwand für die Abdichtung und Führung des Verschwenkmechanismus gering ist und vor allem eine sichere Abdichtung gewährleistet ist, die aufgrund verminderter Leckagen eine exaktere Volumenstrombestimmung zulässt. Da infolge des eingesetzten Kippmechanismus der in Umfangsrichtung im Triebwerksgehäuse verlaufende Spalt deutlich kleiner ausgebildet werden kann, wird dessen negativer Einfluss auf die Stabilität und das Schwingungsverhalten des Triebwerksgehäuses vermindert.

Im Rahmen des vorstehenden Kippmechanismus sind noch andere Ausführungsformen denkbar. Beispielsweise kann die Kugel 3 zur Führung der Kippbewegung auch eine kreisbogenförmige Nut aufweisen, in die ein am Kugelgehäuse befestigtes Führungselement eingreift. Ausgehend von dem grundlegenden Erfindungsgedanken, die Messsonde in einen Kippmechanismus zu integrieren und die Bewegung der Messsonde innerhalb der zu messenden Strömung durch deren Verschwenken zu bewirken, werden von der Erfindung noch andere als die zuvor beschriebene Ausführungsvariante erfasst. Beispielsweise kann das hier kugelförmige Dichtungs- und Führungselement auch ein geometrisch anders geformter Körper sein, der in dem Dichtkörpergehäuse nach außen abgedichtet drehbar angeordnet ist.

### Bezugszeichenliste

- 1: Dichtkörpergehäuse
- 2: Horizontale Achse
- 3: Kugel, Dichtkörper
- 4: Adapter
- 5: Messsonde
- 6: Befestigungssockel, Gehäusesockel
- 7: Schrauben
- 8: Auflagefläche v. 6
- 9: Schlitzförmiger Hohlraum v. 6
- 10: Weite Öffnung v. 9
- 11: Kleine Öffnung v. 9
- 12: Abflachung v. 3
- 13: Stützelement
- 14: Vertiefung
- 15: Schwenkantriebswelle
- 16: Stopfbuchsenlager
- 17: Dichtring für 15
- 18: Gleitringdichtung
- 19: Federring
- 20: Gleitringdichtung
- 21: Klemmvorrichtung

## Patentansprüche

1. Kippvorrichtung für eine Messsonde (5) zur Durchführung von Messungen in einem Querschnittsflächensektor eines Strömungskanals, die am Außenumfang des Strömungskanals angebracht ist und deren Messsonde (5) einen in Umfangsrichtung des Strömungskanals verlaufenden Schlitz durchgreift, insbesondere zur Bestimmung des Strömungsprofils in einem Kompressor oder einer Turbine eines Gasturbinentriebwerks,
**gekennzeichnet durch**
- ein starr am Strömungskanal befestigtes Gehäuse (1, 6),
- eine im Gehäuse (1, 6) um eine horizontale Achse (2) schwenkbar und nach außen abdichtend gelagerte als Dichtkörper dienende Kugel (3), in der die Messsonde (5) radial verschiebbar gehalten ist,
- wobei eine im Gehäuse (1, 6) ausgebildete Öffnung den Schlitz im Strömungskanal statisch abdichtend überdeckt, und
- wobei die Kugel (3) auf der horizontalen Achse (2) an einer Seite an einem Stützelement (13) und an der gegenüberliegenden Seite an einem in eine Vertiefung (14) in der Kugel (3) eingreifenden Führungselement (15) gehalten ist.

2. Kippvorrichtung nach Anspruch 1, **dadurch gekennzeichnet, dass** das Gehäuse ein Dichtkörpergehäuse (1) mit einem sich zum Strömungskanal hin anschließenden Befestigungssockel (6) umfasst, in dem ein an den Hohlraum im Dichtkörpergehäuse (1) anschließender schlitzförmiger und sich zum Strömungskanal hin erweiternder Hohlraum (9) ausgebildet ist, in dem die Messsonde (5) schwenkbar beweglich ist und dessen weite Öffnung (10) den Schlitz im Strömungskanal überdeckt.

3. Kippvorrichtung nach Anspruch 1, **dadurch gekennzeichnet, dass** die Kugel (3) vertikal beidseitig gegen mit dem Dichtkörpergehäuse (1) verbundene Gleitringdichtungen (18, 20) abgestützt ist.

4. Kippvorrichtung nach Anspruch 3, **dadurch gekennzeichnet, dass** die Kugel (3) und die Gleitringdichtungen (18, 20) aus Keramik, Metall oder Messing bestehen.

5. Kippvorrichtung nach Anspruch 1, **dadurch gekennzeichnet, dass** die Vertiefung (14) eine kreisbogenförmige Nut ist, in deren Bereich die Kugel (3) verdrehbar ist.

6. Kippvorrichtung nach Anspruch 1, **dadurch gekennzeichnet, dass** die Vertiefung (14) zentrisch angeordnet ist und in diese eine im Dichtkörpergehäuse (1) abdichtend gelagerte Schwenkantriebswelle (15) eingreift.

7. Kippvorrichtung nach Anspruch 1, **gekennzeichnet durch** einen den Dichtkörper (3) durchgreifenden und in diesem fixierten Adapter (4), in dem die Messsonde (5) radial verschiebbar und **durch** eine Klemmvorrichtung (21) in der jeweiligen radialen Messposition fixierbar ist.

8. Kippvorrichtung nach Anspruch 2, **dadurch gekennzeichnet, dass** der Befestigungssockel (6) einschließlich des mit diesem verbundenen Dichtkörpergehäuses (3) an seiner Auflagefläche (8) über eine Flachdichtung und mittels Schrauben (7) fest mit der Außenfläche des Strömungskanals verbunden ist.

## Claims

1. Tilting device for a measuring probe (5) for conducting measurements in a cross-sectional surface sector of a flow duct, with said device being attached to the outer circumference of the flow duct and its measuring probe (5) passing through a slot running in the circumferential direction of the flow duct, in particular to determine the flow profile in a compressor or a turbine of a gas-turbine engine,
**characterized by**
- a casing (1, 6) rigidly fastened to the flow duct,
- a ball (3) mounted in the casing (1, 6) swivellably about a horizontal axis (2), sealing towards the outside and acting as a sealing element, inside which the measuring probe (5) is held in a radially displaceable manner,
- where an opening provided in the casing (1, 6) covers the slot in the flow duct in a statically sealing manner, and
- where the ball (3) is held on the horizontal axis (2) at one side by a supporting element (13) and at the opposite side by a guiding element (15) engaging in a recess (14) in the ball (3).

2. Tilting device in accordance with Claim 1, **characterized in that** the casing includes a sealing element casing (1) with a fastening base (6) adjoining the flow duct and in which is formed a slot-like cavity (9) adjoining the cavity in said sealing element casing (1), widening towards the flow duct and in which the measuring probe (5) is swivellably movable and its wide opening (10) covers the slot in said flow duct.

3. Tilting device in accordance with Claim 1, **characterized in that** the ball (3) is braced vertically on both sides against end face mechanical seals (18, 20) connected to the sealing element casing (1).

4. Tilting device in accordance with Claim 3, **characterized in that** the ball (3) and the end face mechanical seals (18, 20) consist of ceramic, metal or brass.

5. Tilting device in accordance with Claim 1, **characterized in that** the recess (14) is an arc-shaped groove in the area of which the ball (3) is rotatable.

6. Tilting device in accordance with Claim 1, **characterized in that** the recess (14) is centrally arranged and a swivelling drive shaft (15) mounted in sealing manner in the sealing element casing (1) engages therein.

7. Tilting device in accordance with Claim 1, **characterized by** an adapter (4) passing through the sealing element (3) and fixed therein, in which adapter the measuring probe (5) is radially displaceable and fixable by a clamping device (21) in the respective radial measuring position.

8. Tilting device in accordance with Claim 2, **characterized in that** the fastening base (6) including the sealing element casing (3) connected thereto is firmly connected at its contact surface (8) via a flat seal and by means of bolts (7) to the outer surface of the flow duct.

## Revendications

1. Dispositif culbuteur pour une sonde de mesure (5) destinée à effectuer des mesures dans un secteur de surface transversal d'un canal d'écoulement, lequel dispositif est fixé au pourtour extérieur du canal d'écoulement et dont la sonde de mesure (5) traverse une fente s'étendant dans le sens circonférentiel du canal d'écoulement, en particulier pour déterminer le profil d'écoulement dans un compresseur ou une turbine d'un moteur à turbine à gaz,
**caractérisé par**
- un boîtier (1, 6) fixé de manière rigide au canal d'écoulement,
- une bille (3) logée dans le boîtier (1, 6), pivotante autour d'un axe horizontal (2), assurant l'étanchéité vers l'extérieur et servant de corps d'étanchéité, dans laquelle la sonde de mesure (5) est maintenue de manière déplaçable dans le sens radial,
- sachant qu'une ouverture formée dans le boîtier (1, 6) recouvre la fente dans le canal d'écoulement en assurant statiquement l'étanchéité, et
- que sur l'axe horizontal (2), la bille (3) est maintenue sur un côté par un élément de maintien (13) et sur le côté opposé par un élément de guidage (15) qui s'engage dans un évidement (14) formé dans la bille (3).

2. Dispositif culbuteur selon la revendication n° 1, **caractérisé en ce que** le boîtier comprend un boîtier de corps d'étanchéité (1) avec un socle de fixation (6) se raccordant en direction du canal d'écoulement et dans lequel est formée une cavité (9) en forme de fente se raccordant à la cavité dans le boîtier de corps d'étanchéité (1) et s'évasant en direction du canal d'écoulement, dans laquelle la sonde de mesure (5) est mobile de manière pivotante et dont la grande ouverture (10) recouvre la fente dans le canal d'écoulement.

3. Dispositif culbuteur selon la revendication n° 1, **caractérisé en ce que** la bille (3) s'appuie verticalement des deux côtés contre des garnitures mécaniques (18, 20) reliées au boîtier de corps d'étanchéité (1).

4. Dispositif culbuteur selon la revendication n° 3, **caractérisé en ce que** la bille (3) et les garnitures mécaniques (18, 20) sont constituées de céramique, de métal ou de laiton.

5. Dispositif culbuteur selon la revendication n° 1, **caractérisé en ce que** l'évidement (14) est une gorge en forme d'arc de cercle au niveau de laquelle la bille (3) peut tourner.

6. Dispositif culbuteur selon la revendication n° 1, **caractérisé en ce que** l'évidement (14) est placé de manière centrée et que dans ledit évidement (14) s'engage un arbre menant pivotant (15) logé dans le boîtier de corps d'étanchéité (1) en assurant l'étanchéité.

7. Dispositif culbuteur selon la revendication n° 1, **caractérisé par** un adaptateur (4) traversant le corps d'étanchéité (3) et fixé dans ledit corps d'étanchéité (3), adaptateur dans lequel la sonde de mesure (5) est déplaçable dans le sens radial et peut être fixée par un dispositif de serrage (21) dans la position radiale de mesure respective.

8. Dispositif culbuteur selon la revendication n° 2, **caractérisé en ce que** le socle de fixation (6), y compris le boîtier de corps d'étanchéité (3) relié à celui-ci, est relié fermement sur sa surface d'appui (8) à la surface extérieure du canal d'écoulement par un joint plat et au moyen de vis (7).
